(19) Europäisches Patentamt
European Patent Office
Office européen des brevets

(11) **EP 2 789 645 A1**

(12) **EUROPEAN PATENT APPLICATION**
published in accordance with Art. 153(4) EPC

(43) Date of publication:
**15.10.2014 Bulletin 2014/42**

(51) Int Cl.:
*C08J 5/04* (2006.01)    *C08K 7/02* (2006.01)
*C08L 101/00* (2006.01)

(21) Application number: **12855051.4**

(22) Date of filing: **06.12.2012**

(86) International application number:
**PCT/JP2012/081607**

(87) International publication number:
**WO 2013/084976 (13.06.2013 Gazette 2013/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2011 JP 2011267751**

(71) Applicant: **Toyota Shatai Kabushiki Kaisha Kariya-shi, Aichi 448-0002 (JP)**

(72) Inventors:
• **OKUDA, Nobuhisa**
  **Aichi 4480002 (JP)**
• **NISHIMURA, Takuya**
  **Aichi4480002 (JP)**

(74) Representative: **Chettle, Adrian John et al**
**Withers & Rogers LLP**
**4 More London Riverside**
**London**
**SE1 2AU (GB)**

(54) **ENGINE COVER**

(57) An automobile engine cover including a plastic molding. The plastic molding includes a thermoplastic, 1% to 5% by weight of vegetable fibers with a fiber length of less than 1 mm, and 1% to 20% by weight of non-vegetable fibers with a fiber length of 1 mm to 5 mm.

FIG. 1

EP 2 789 645 A1

**Description**

Technical Field

The present invention relates to plastic moldings including fibers, and in particular to an engine cover formed of white plastic molding of Japanese paper style.

Background Art

As plastic molding with embedded fibers, there is conventionally known fiber-reinforced plastics. The fiber-reinforced plastics typically contains rigid fibers, such as carbon or glass fibers, are widely known as the reinforcing fibers. In view of the recent increased awareness of environmental conservation, fiber-reinforced plastics have also been proposed that have fibers consisting of organic material as reinforcing fibers in place of carbon, glass and other inorganic fibers, which may be a residue after incineration. For example, Japanese Laid-open Patent Application Publication No. 2007-056202 (hereinafter referred to as Document) discloses a thermoplastic molding that includes cellulose fiber such as wood pulp in combination with one or more other organic fibers selected from polyester, nylon and acrylic fibers, thereby increasing the strength of the molding. The Document states that for 100 parts by weight of thermoplastic, the cellulose fiber content is preferably 3 to 30 parts by weight, and the polyester or other organic fiber content is preferably 1 to 300 parts by weight. It also discloses, in a specific embodiment, a polypropylene molding containing pulp, as cellulose fibers, with fiber length of about 2 mm and polyester fibers with fiber length of 2.5 or 5 mm. In terms of percentage by mass in the molding, the pulp fiber content is 15% to 41%, the polyester fiber content is 5% to 15%, and the total fiber content is 30% to 46%.

Summary of the invention

Problems to be Solved by the Invention

Plastic moldings are often used in interior materials of an automobile. While functionality is of course required in the interior materials, expansion of the design variations is also desired since the design may have great influence on the appearance around the installation space. Accordingly, the present inventors have attempted to develop a plastic molding that has the appearance of white Japanese paper as a new variant based on the concept of "flavor of Japan (or Japanese style)."

Japanese paper is typically handcrafted from long vegetable fibers of *kozo* (or paper mulberry), *mitsumata* and *gampi* shrubs. It produces at least a fibrous texture suggesting that some fibers are contained as a raw material, although the feel and appearance of fibers may not be retained. In addition, with a myriad of voids between and inside of the fibers where light is scattered, Japanese paper exhibits whiteness with a hazy, pale impression, which is quite different from, for example, that of a plastic molding painted white with pigment. If the texture unique to the Japanese paper could be realized in plastic moldings, it would create a novel impression that evokes a Japanese style.

The plastic molding of the above-mentioned Document, in contrast, might be able to present fibrous texture to an uncertain degree according to its fiber content. However, the fibers of the Document have a relatively large content for the purpose of reinforcement; the polyester and pulp fibers together amounts 30% to 46% in total. In addition, the polyester and pulp fibers both have relatively long length. The increased flow resistance when being mixed with plastic can easily raise the temperature, causing yellowing of the pulp fibers. Moreover, the pulp fiber content in the molding is as much as 15% to 41%, which is equal to or more than half of the total fibers, so the whole molding can possibly be yellowed. The above-mentioned Document considers nothing about designing color tones at all, and thus has no particular mention to preferred conditions for assuredly obtaining a white molding, let alone for presenting whiteness with a hazy, pale impression of Japanese paper. Therefore, it can not possibly generate the texture unique to Japanese paper, even if it provides fibrous feeling to some extent.

Means for Solving the Problems

In one aspect of the present invention, there is provided a plastic molding having a thermoplastic, 1% to 5% by weight of vegetable fibers with fiber length of less than 1 mm, and 1% to 20% by weight of non-vegetable fibers with fiber length of 1 mm to 5 mm. The plastic molding may be used to form automobile interior materials, such as an engine cover. In a preferred embodiment, the non-vegetable fibers may be at least one of inorganic fibers and synthetic fibers.

In such a composition, the non-vegetable fiber content of 1% to 20% by weight with fiber length of 1 mm to 5 mm provides moderate fibrous texture. In addition, 1% to 5% by weight of vegetable fibers with fiber length of less than 1 mm allows for expressing the whiteness of the light impression of Japanese paper. In addition, the total content and moderate proportion of vegetable and non-vegetable fibers provide a moderate transmittance of light. In this way, the plastic molding can be evocative of Japanese paper. It is also excellent in heat resistance since it contains not only the non-vegetable fibers but the vegetable fibers as well.

In the present invention, the content of relatively long, non-vegetable fibers that are hard to be yellowed by heat provide the plastic molding with fibrous texture while controlling yellowing. However, those non-vegetable fibers alone are insufficient to express the whiteness of pale impression of Japanese paper. The vegetable fibers included together with non-vegetable fibers increase scattering of light in the plastic molding to a moderate level, thereby producing a feeling of Japanese paper. Having a fiber length of less than 1 mm and the limited content of 1% to 5% by weight, the vegetable fibers can present texture of Japanese paper while controlling yellowing. Further, the non-vegetable fibers, which themselves are hard to be yellowed, but the lowered content of 20% or less by weight and the limited fiber length of 5 mm or shorter can reduce flow resistance during kneading process to produce fibrous texture while controlling yellowing of vegetable fibers. As a result, the whiteness of Japanese paper effectively expressed.

In another preferred embodiment, the plastic composition may have brightness of 70% or more, scattering factor of 3 m2/kg or more, and transmittance of 50% to 65%. In this case, the appearance will more closely resemble that of Japanese paper. The brightness may be ISO brightness as defined in JIS P 8148 that is measured by means of diffuse reflectance.

Brief Description of the Drawings

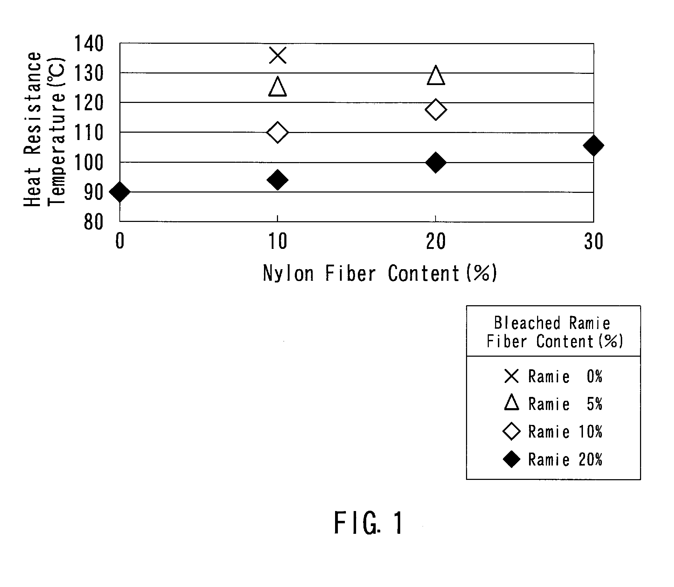

Fig. 1 is a plot showing the measurement results of the heat resistance temperature of the sample plastic moldings that have different contents of ramie fibers and nylon fibers.

Mode for Carrying out the Invention

A thermoplastic, vegetable fiber, plastic molding of the present invention includes non-vegetable fibers. In the following, embodiments of the present invention will be explained in detail.

Translucent or transparent synthetic plastics are preferably used as the thermoplastic, because the use of opaque plastics would provide a weaker presence of fibers and thus not an appearance like that of Japanese paper. Transparent or translucent thermoplastics include for example: polypropylene, polyethylene and other polyolefins; polycarbonates; polyethylene terephthalate, polybutylene terephthalate, poly(ethylene 2,6-naphthalate) and other polyesters; propylene ethylene copolymers; polystyrene; copolymers of aromatic vinyl monomers and acrylic (or methacrylic) alkyl esters with lower alkyl groups; copolymers of terephthalic acid, ethylene glycol and cyclohexanedimethanol; and poly(methyl methacrylate) and other acrylic (or methacrylic) polymers. These thermoplastics may be used alone or as a mixture of two or more together. Thermoplastics with a higher melting point require heating at a higher temperature, which may cause the vegetable fibers to be easily discolored. This means that a lower melting point is preferable. Considering ensuring a certain degree of heat resistance in the molding, and moldability as well as material costs, polypropylene is the most preferred as the thermoplastic to be used, and polyethylene, polyester or polycarbonate plastics may also be preferably used.

Vegetable fibers include, for example, pulp, ramie, cotton, kapok, kenaf, linen (flax), abacá (Manila hemp), henequen, sisal, jute, hemp (cannabis), coconut palm, oil palm, kozo, straw and bagasse. One of these fibers may be used alone, or two or more may be used in combination. The vegetable fibers may preferably have as high a brightness as possible because the resulting plastic molding will have accordingly higher brightness. Particularly, the brightness may preferably be at least 70%, and more preferably 75% or more.

The vegetable fibers may have lengths of less than 1 mm, and a content of 1% to 5% by weight in the plastic molding. They can effectively increase the scattering of light inside the plastic molding, to express the whiteness with a hazy, pale impression of Japanese paper. A fiber length of 1 mm or longer is undesirable because it would become easily yellowed through the significantly warmer thermal history due to friction and flow resistance between fibers at the time of kneading. This will result in lowered brightness of the plastic molding. The fiber length has no particular lower limit because light tends to be easily scattered inside a plastic molding with shorter fibers. For example, the fiber length may be a few ten micrometers, which is largely powder.

At least 1% by weight of vegetable fiber content can increase the scattering coefficient to thereby express whiteness giving a hazy, pale impression of Japanese paper. However, the scattering coefficient tends to decrease as the vegetable fiber content increases. More than 5% by weight of vegetable fiber content would not contribute to any further improvement of the molding's texture similar to Japanese paper. Such vegetable fiber content is undesirable because the plastic molding is easily yellowed through the significantly warmer thermal history due to friction and flow resistance between fibers during being kneaded. 1% to 5% by weight of vegetable fiber content also effectively enhances the heat resistance of the plastic molding.

The diameter of the vegetable fibers is not particularly limited. Fibers taken from natural plants may be used as they are, or the fiber diameter may be altered as desired through a fibrillation process. However, the fibers preferably used are obtained from natural plants since fibrillation is time consuming. Depending on the plant, its fibers are obtained in either individual fiber or fiber bundle form. Accordingly, the diameter of the vegetable fibers may be referred to as the diameter of fibrillated fibers, as well as the diameter of fiber bundles and individual fibers. Note that the non-fibrillated vegetable fibers will have limited fineness of fiber, so vegetable fibers with the smallest fiber diameter would have a diameter of about 10 micrometers.

The non-vegetable fiber may be any fiber other than plant-based natural fibers. The non-vegetable fibers includes inorganic fibers, which are made of inorganic materials and synthetic fibers, which are made from synthetic polymers. Non-vegetable fibers may be used alone, or used as a mixture of two or more kinds.

The material of the synthetic fibers may preferably be thermoplastic polymers when the forming of fibers is taken into consideration. When thermoplastic fibers are used, a plastic fibers should have a melting point higher than that of the matrix thermoplastic of the plastic molding. If the melting point is lower than that of the matrix thermoplastic, the synthetic plastic fibers would melt during the molding process. The thermoplastics for the fibers include, for example, polyethylene terephthalate, polybutylene terephthalate, poly(ethylene 2,6-naphthalate) and other polyesters, nylon and other polyamides, and polyacrylates. Polyamides and polyesters are particularly preferred among them. Fibers of thermosetting plastics, such as phenolic plastics, epoxy plastics, melamine plastics and urea plastics may also be used.

The use of inorganic fibers is advantageous for higher impact resistance and mechanical strength, and enhanced heat resistance. The inorganic fibers include glass, ceramic and metal fibers. Glass fibers are particularly preferred in that they hardly affect the brightness of the plastic molding.

The non-vegetable fibers may preferably have fiber lengths of 1 mm to 5 mm, and a content of 1% to 20% by weight in the plastic molding. A fiber length of more than 5 mm might reduce the fluidity of the molten plastic being kneaded, thereby worsening the moldability of the plastic molding. There is another concern of yellowing of vegetable fibers through significantly warmer thermal history due to lowered fluidity. As the fiber content increases, the scattering coefficient of the plastic molding tends to decrease. When the fiber content exceeds 20% by weight, the scattering coefficient would be lowered below that of Japanese paper, thereby making the appearance different from Japanese paper. Such a fiber content is unfavorable also because the formability might be worsened, and the vegetable fibers might be yellowed.

The plastic molding may be made from the thermoplastic and the vegetable and non-vegetable fibers that are kneaded and then formed by injection or extrusion molding. In particular, injection molding can apply any desired shape to the plastic molding. The molding temperature should be above the melting point of the thermoplastic, and, in case of synthetic fibers used as non-vegetable fibers, below the melting point of the synthetic fibers. In addition, it is important that the molding temperature should be such that the vegetable fibers do not yellow. In other words, the molding temperature should be lower than the yellowing temperature of the vegetable fibers. For this purpose, the molding temperature may be 220 °C or lower, preferably 200 °C or lower, and more preferably 180 °C or lower. In such a temperature, the plastic molding can be formed while keeping the white fibers white.

A plastic molding obtained in the manner described above has an appearance suggestive of Japanese paper, with ISO brightness of 70%, scattering coefficient of 3 or more, and light transmittance of 50% to 65%. The transmittance and scattering coefficients are measured by the optical characteristic measuring method which is generally used in papermaking science. The plastic molding can be used to manufacture a cover that covers interior materials of an automobile, particularly the engine. The automobile interior materials may include not only the engine cover but also the door trims, inner panels, pillar garnishes, rear parcel tray, sun visors, and interior light lenses. The plastic molding may be used to form not only the automobile interior materials but also building materials, civil engineering materials, packaging materials, and daily necessities.

While embodiments of the present invention have been described with reference to the embodiments described above, it should be apparent to those skilled in the art that many substitutions, improvements, alterations are possible without departing from the scope of the present invention. Accordingly, embodiments of the present invention may include any substitutions, modifications and alterations that do not depart from the spirit and scope of the appended claims. For example, it is possible to add various additives into the plastic molding as long as they do not impede the effects of the present invention. Specifically, the additives that can be added include dispersing agents, stabilizers, plasticizers, modifying agents, ultraviolet absorbers, light stabilizers, antioxidants, antistatic agents, lubricants, and mold release agents.

TEST 1:

In Test 1, sample plastic moldings were prepared from the materials specified below that were mixed according to the compositions defined in Table 1, and then formed by injection at 200 °C into a flat plate sized 55 mm x 50 mm x 1 mm. Thermoplastic polymer:

Polypropylene (AZ864 produced by Sumitomo Chemical Co., Ltd.)

Vegetable fibers:

Pulp fibers (KC FLOCK W-50 produced by Nippon Paper Chemicals Co., Ltd.; fiber length: 80-200 µm)

Non-vegetable fibers:

Polyethylene terephthalate (PET) fibers (fiber diameter: 14.3 µm; fiber length: 3 mm)
Glass fibers (fiber diameter: 22 µm; fiber length: 5 mm)

Table 1

| | Vegetable Fibers (% by weight) | Non-vegetable Fibers (% by weight) | | Brightness (%) |
|---|---|---|---|---|
| | | PET | Glass | |
| Blank | 0 | 0 | 0 | 80.4 |
| Sample 1 | 3 | 0 | 0 | 76.4 |
| Sample 2 | 10 | 0 | 0 | 66.2 |
| Sample 3 | 0 | 10 | | 80.0 |
| Sample 4 | 0 | 20 | | 75.4 |
| Sample 5 | 0 | | 10 | 76.2 |
| Sample 6 | 0 | | 20 | 72.5 |
| Sample 7 | 1 | 5 | | 79.8 |
| Sample 8 | 3 | | 10 | 73.8 |

Then, the brightness was evaluated for each prepared sample by the measuring method described below. The results are shown together in Table 1 above.

The brightness was evaluated by measuring ISO brightness as defined in JIS P 8148 using a spectrophotometer, CMS-35SP, made by Murakami Color Research Laboratory. The measurement conditions are as follows.
Light source: Illuminant D65
Vision angle: 10°
Color space: CIE L*a*b*
Optical conditions: SCE (Specular Component Excluded) method
Measurement area: 12 x 17

Referring to Table 1, it was confirmed that the brightness decreased as either vegetable or non-vegetable fiber content increased, but the decrease in brightness was rather gradual during the increase of the non-vegetable fiber content. In addition, when the non-vegetable fiber content is 20% or less by weight regardless of the kind of fiber, the brightness stayed at substantially the same level as the target brightness which is that of standard Japanese paper (i.e. 70% or higher). It was confirmed that the vegetable fiber content, in contrast, had more influence on the brightness, which was the same as that of standard Japanese paper when the vegetable fiber content was 3% by weight, but went away from that of standard Japanese paper in the case of 10% by weight. When only the brightness is focused on, it was equal to the brightness of Japanese paper when either vegetable or non-vegetable fiber was included and its content was below a certain level. Samples 1-6 contained only either one of vegetable and non-vegetable fibers. When each sample was visually observed, it was determined that the variation of the content did not become visually suggestive of Japanese paper. In contrast, Samples 7 and 8, which contained both short vegetable fibers and relatively long non-vegetable fibers, had a significantly closer appearance to that of Japanese paper regardless of the type of non-vegetable fiber.

TEST 2:

In Test 2, in addition to Sample 7 used in Test 1, sample plastic moldings with different contents of the PET and vegetable fibers was prepared according to the composition shown in Table 2, in the same manner as in Test 1. An additional plastic molding containing no fibers was also prepared as a blank sample.

Table 2

| | Vegetable Fibers (% by weight) | PET Fibers (%by weight) | Brightness (%) | Scattering Coefficient (m$^2$/kg) | Transmittance (%) | Loss Rate (%) | Heat Resistance Temperature (°C) |
|---|---|---|---|---|---|---|---|
| Blank | 0 | 0 | 80.4 | | 67.3 | 0.7 | 87.8 |
| Sample 7 | 1 | 5 | 79.8 | 10.2 | 62.9 | 1.4 | 90.9 |
| Sample 9 | 3 | 10 | 78.0 | 5.5 | 59.1 | 2.0 | 95.9 |
| Sample 10 | 3 | 25 | 66.6 | 2.0 | 47.2 | 6.5 | 98.4 |
| Sample 11 | 5 | 10 | 72.6 | 4.6 | 57.9 | 3.3 | 97.5 |
| Sample 12 | 5 | 20 | 71.1 | 3.2 | 52.0 | 5.0 | 99.6 |
| Sample 13 | 6 | 15 | 68.9 | 2.4 | 49.0 | 5.0 | 97.0 |

Brightness was then measured in the same manner as in Test 1, and optical properties (scattering coefficient, transmittance, loss rate), which are indicative of the unique texture of the Japanese paper, was also measured. Heat resistance was also evaluated. The results are shown together in Table 2.

Transmittance and scattering coefficient were measured and calculated by a known method commonly used in papermaking science or the like field, using a spectrophotometer, CMS-35SP, made by Murakami Color Research Laboratory. The measurement conditions were the same as those of brightness. Loss rates (or absorption rates) were calculated by the following equation:

$$\text{Loss rate }(\%) = 100 - \text{transmittance} - \text{reflectance}.$$

The reflectance was also measured by a known method commonly used in papermaking science or the like field using the same spectrophotometer CMS-35SP as above. The measurement conditions were the same as those of brightness.

The heat resistance was measured according to ISO 75-1,75-2 and 75-3.

A comparison of Samples 9 and 10 has shown that the brightness decreased as the non-vegetable fiber content increased, and when the non-vegetable fiber content was 25% by weight, the brightness was lower than that of standard Japanese paper (which is 70% or more). Also, when the non-vegetable fiber content was 25% by weight, the scattering coefficient, transmittance and loss rate were all out of the target range that is determined on the basis of the measurements for standard Japanese paper (i.e. a scattering coefficient of 3 m2/kg or more, a transmittance of 50% to 65%, and a loss rate of 5% or less). It should be noted that although the standard Japanese paper that was subjected to measurement had a scattering coefficient of 30 m2/kg, the target value was set to 3 m2/kg because existing lamp shade materials made of plastic in combination with Japanese paper have a scattering coefficient of about a tenth that of the raw Japanese paper while apparently retaining a suggestion of Japanese paper.

It was also observed that the increase in the vegetable fiber content had more influence on the decrease in the brightness of the plastic molding than the increase in the non-vegetable fiber content. Specifically, comparison of Samples 10 and 13 has shown that when the vegetable fiber content was 6% or more by weight, the brightness was lower than that of standard Japanese paper despite that the non-vegetable fibers content was 15% by weight, which was reduced by 10 percentage points as compared to that of Sample 10. The transmittance and scattering coefficient were also out of the target range of standard Japanese paper. In contrast, the results of Sample 12 shows that when vegetable fiber content was 5% by weight, the brightness was equal to that of standard Japanese paper, even though the non-vegetable fiber content was 20% by weight. The scattering coefficient, loss rate and transmittance were also the same as those of standard Japanese paper,. In conclusion, it has been found that the vegetable fiber content is required to be 5% or less by weight, and the non-vegetable fiber content is required to be 20% or less by weight.

A comparison of Samples 7, 9 and 11 has shown that the vegetable fiber content of 3% or less by weight is preferable, since it provided a plastic molding with a higher brightness, and the non-vegetable fiber content of 10% or less by weight is more preferable since it more effectively enhanced the brightness. With regard to heat resistance (or heat resistance temperature), it has been confirmed that the heat resistance improves when vegetable and non-vegetable fibers are both included.

TEST 3:

In Test 3, similar vegetable fibers used in Sample 8 from Test 1 were used. However, glass fibers having a length of 5 mm were added and the content of each fiber was varied according to the compositions shown in Table 3. The brightness and optical properties (i.e. scattering coefficient, transmittance, loss rate) were then evaluated for each prepared sample in the same manner as in Test 2. The results are also shown together in Table 3.

Table 3

|  | Vegetable Fibers (% by weight) | Glass Fibers (%by weight) | Brightness (%) | Scattering Coefficient ($m^2$/kg) | Transmittance (%) | Loss Rate (%) |
|---|---|---|---|---|---|---|
| Blank | 0 | 0 | 80.4 |  | 67.3 | 0.7 |
| Sample 8 | 3 | 10 | 73.8 | 4.2 | 64.3 | 2.3 |
| Sample 14 | 3 | 25 | 65.1 | 1.5 | 63.0 | 4.0 |
| Sample 15 | 5 | 20 | 70.1 | 3.1 | 62.5 | 4.5 |
| Sample 16 | 6 | 10 | 65.6 | 3.4 | 61.6 | 4.7 |

Table 3 clearly shows that when the vegetable fiber content was 5% or less by weight and the non-vegetable fiber content was 20% or less by weight, then the brightness, scattering coefficient, transmittance and loss rate were all at the same level as the reference based on the standard Japanese paper even though the non-vegetable fibers had the fiber length of 5 mm. From above, it has been found that the non-vegetable fibers preferably have a fiber length of 5 mm or shorter.

TEST 4:

In Test 4, sample plastic moldings were prepared from the materials specified below that were mixed according to the compositions and fiber lengths specified in Table 4. They were then kneaded and extruded at 190 °C by a twin-screw extruder into a shape of flat plate sized 55 mm x 50 mm x 1 mm. The brightness and optical properties (i.e. scattering coefficient, transmittance and loss rate) were then evaluated for each prepared sample in the same manner as in Test 2. The results are shown in Table 4.

Thermoplastic polymer:

Polypropylene (J106G produced by Prime Polymer Co., Ltd.)

Vegetable fiber:

Ramie fibers (fiber brightness: 84.1%)

Non-vegetable fiber:

Polyethylene terephthalate (PET) fibers (fiber diameter: 14.3 $\mu$m)

Table 4

| | Vegetable Fibers | | Non-vegetable Fibers | | Brightness (%) | Scattering Coefficient (m²/kg) | Transmittance (%) | Loss Rate (%) |
|---|---|---|---|---|---|---|---|---|
| | Length (mm) | Content (% by weight) | Length (mm) | Content (%by weight) | | | | |
| Sample 17 | 0.3 | 5 | 1.5 | 10 | 70.2 | 3.9 | 52.7 | 4.2 |
| Sample 18 | 0.3 | 10 | 1.5 | 10 | 65.4 | 5.0 | 43.6 | 4.9 |
| Sample 19 | 0.7 | 5 | 1.5 | 10 | 71.2 | 7.7 | 63.5 | 4.8 |
| Sample 20 | 1.5 | 5 | 1.5 | 10 | 64.4 | 4.1 | 50.9 | 5.1 |
| Sample 21 | 0.3 | 5 | 0.5 | 10 | 69.4 | 3.4 | 84.8 | 2.8 |

From comparison of Samples 17 and 18, it has been confirmed that when the vegetable fiber content was 5 mm or shorter, the brightness, scattering coefficient, transmittance and loss rate all satisfied the criterion based on the standard Japanese paper, as found from the results of Test 2, even though the vegetable fiber length of 0.3 mm which was longer than in Test 2. Comparison of Samples 17, 19 and 20, however, has clarified that in the case of the vegetable fiber lengths of 0.3 mm and 0.7 mm, there was found no difference between the brightnesses, which were both equivalent to that of Japanese paper. In contrast, when the fibers of vegetable fibers had the length of 1.5 mm, the brightness dropped below the reference based on Japanese paper even though the fiber content was 5% or less by weight. Further comparison of Samples 17 and 21 shows that the non-vegetable fiber length of 1.5 mm satisfied the criterion based on Japanese paper, while the reduced fiber length of 0.5 mm resulted in an increased transmittance that was out of the reference of standard Japanese paper. In other words, the fibrous feeling faded and the appearance went away from that of Japanese paper. In conclusion, it has been found that the vegetable fiber length may preferably be shorter than 1 mm, and the non-vegetable fiber length may preferably be 1 mm or longer.

TEST 5:

For Test 5, ramie fibers were used as vegetable fibers and nylon fibers as non-vegetable fibers. Sample plastic moldings were prepared while ramie fiber content varied from 0% to 20%, and the heat resistance temperature was measured for each sample by the method described above. From the results shown in Fig. 1, it was found that the more the ramie fiber content, the higher the heat resistance temperature. Specifically, the nylon fiber content of 10% by weight raised the heat resistance temperature by only about 5 °C, while the additional ramie fiber content of 10% by weight further elevated the heat resistance temperature by about 30 °C. It has been thus confirmed that the heat resistance of the plastic molding will effectively improve by inclusion of a large amount of vegetable fibers in addition to the non-vegetable fibers. For example, a heat resistance temperature of 110 °C or higher requires a vegetable fiber content of 5% or more in the plastic molding. It was also found that the heat resistance temperature of the plastic molding will increase at a greater rate when the ramie fiber content is small. Specifically, the increase in the heat resistance temperature was greater when the nylon fiber content increased from 0% to 5% than when it increased from 5% to 10%.

**Claims**

1. An automobile engine cover comprising a plastic molding, the plastic molding comprising thermoplastic, 1% to 5% by weight of vegetable fibers with a fiber length of less than 1 mm, and 1% to 20% by weight of non-vegetable fibers with a fiber length of 1 mm to 5 mm.

2. The engine cover of claim 1 wherein the plastic molding has a brightness of 70 or more.

3. The engine cover according to claim 1 or 2 wherein the non-vegetable fibers comprise at least one inorganic fiber or synthetic fiber.

4. The engine cover according to any one of claims 1 to 3 wherein the plastic molding has a scattering coefficient of 3 or more.

5. The engine cover according to any one of claims 1 to 4 wherein the plastic molding has a transmittance of 50% to 65%.

EP 2 789 645 A1

FIG. 1

10

**INTERNATIONAL SEARCH REPORT**

| | International application No. |
|---|---|
| | PCT/JP2012/081607 |

A. CLASSIFICATION OF SUBJECT MATTER
*C08J5/04*(2006.01)i, *C08K7/02*(2006.01)i, *C08L101/00*(2006.01)i

According to International Patent Classification (IPC) or to both national classification and IPC

B. FIELDS SEARCHED

Minimum documentation searched (classification system followed by classification symbols)
C08J5/04-5/10, C08J5/24, B29B11/16, B29C70/00-70/88, B29C45/00-45/84,
B60R13/01-13/04, B60R13/08, E02F9/00, C08K7/02, C08L101/00

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-195615 A  (Toyota Auto Body Co., Ltd.), 06 October 2011 (06.10.2011), claims; paragraphs [0013] to [0026] (Family: none) | 1-5 |
| A | JP 2011-189532 A  (Toyota Auto Body Co., Ltd.), 29 September 2011 (29.09.2011), claims; paragraphs [0012] to [0028] (Family: none) | 1-5 |
| A | JP 2007-056202 A  (Daicel Polymer Ltd.), 08 March 2007 (08.03.2007), claims; paragraphs [0031] to [0038] (Family: none) | 1-5 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 February, 2013 (25.02.13) | 05 March, 2013 (05.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 789 645 A1**

**INTERNATIONAL SEARCH REPORT**

International application No.

PCT/JP2012/081607

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2012-188570 A (Toyota Auto Body Co., Ltd.), 04 October 2012 (04.10.2012), claims; paragraphs [0023] to [0035] (Family: none) | 1-5 |

Form PCT/ISA/210 (continuation of second sheet) (July 2009)

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007056202 A